(19)

Europäisches Patentamt
European Patent Office
Office européen des brevets

(11) **EP 1 835 463 A2**

(12) **EUROPEAN PATENT APPLICATION**

(43) Date of publication:
**19.09.2007 Bulletin 2007/38**

(51) Int Cl.:
*G06T 7/20* (2006.01)

(21) Application number: **07250949.0**

(22) Date of filing: **07.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **13.03.2006 JP 2006068402**

(71) Applicant: **KABUSHIKI KAISHA TOSHIBA Tokyo 105-8001 (JP)**

(72) Inventors:
• **Nakano, Tsuyoshi,**
c/o Toshiba Corp., IP Division
**Minato-ku, Tokyo (JP)**
• **Kubota, Susumu,**
c/o Toshiba Corp., IP Division
**Minato-ku, Tokyo (JP)**

(74) Representative: **Granleese, Rhian Jane**
**Marks & Clerk**
**90 Long Acre**
**London WC2E 9RA (GB)**

(54) **Obstacle tracking apparatus and method**

(57)     An obstacle tracking apparatus includes an image input unit which acquires image sequences; an obstacle detector which detects candidate areas of an obstacle at a current time from the image sequences; a state hypothesis storage which stores a state hypothesis group including at least one state hypothesis of the obstacle at a previous time; an measurement hypothesis generator which generates a measurement hypothesis group including at least one measurement hypothesis obtained by combining measurement hypotheses for the respective positions of candidate areas of the obstacle and a measurement hypothesis in case the obstacle is not detected; a likelihood calculator which calculates likelihoods of respective combinations of the respective state hypotheses included in the state hypothesis group and the respective measurement hypotheses included in the measurement hypothesis group; a state hypothesis updater which obtains a highest likelihood from the likelihoods of the respective combinations and updates the state hypotheses at the previous time stored in the state hypothesis storage using the state hypothesis group at the current time as the state hypothesis group having the highest likelihood; and a hypothesis selector which selects the state hypothesis having the highest likelihood from the state hypothesis group at the current time as a state in which the obstacle is detected.

FIG. 1

EP 1 835 463 A2

**Description**

CROSS-REFERENCE TO RELATED APPLICATIONS

This application is based upon and claims the benefit of priority from the prior Japanese Patent Application No. 2006-68402, filed on March 13, 2006; the entire contents of which are incorporated herein by reference.

TECHNICAL FIELD

The present invention relates to an obstacle tracking apparatus for detecting and tracking an obstacle such as a vehicle using an image which can be acquired from a TV camera mounted to a moving object represented by a vehicle such as a motor vehicle and a method thereof.

BACKGROUND OF THE INVENTION

In the related art, a method of tracking an obstacle such as a vehicle is proposed in Japanese Application Kokai No. 8-94320. In this method, an area having a number of edge positions on an image is detected as a vehicle and the position of a vehicle tail in an actual space is tracked using a Kalman filter.

There is also a method of tracking non-rigid objects on the basis of a particle filter, which is disclosed in "Multiple non-rigid objects tracking using particle filter (Report from Institute of Electronics, Information and Communication Engineers (IEICE), Abe et al, PRMU2003-241, pp63-66). In this method, a tracking area is split into small areas, and an object such as a vehicle is tracked using a particle filter assuming hypotheses of small areas moving as particles.

However, in the technology disclosed in above-described Japanese Application Kokai No. 8-94320 and "Report from IEICE, PRMU2003-241", there is a problem in simultaneous tracking of the plurality of obstacles.

In other words, in the method disclosed in Japanese Application Kokai No. 8-94320, there are problems such that when the obstacle is not detected because of changing lighting conditions, hiding out of the obstacle, or the like, a significant error is generated in a tracking position by being replaced by another detected obstacle, or wrong obstacle might be tracked.

On the other hand, with the method described in "Report from IEICE, PRMU2003-241, although a robust tracking is possible, it is necessary to use a number of particles for a several discrete measured positions. Therefore, there is a problem that the time of calculation is large.

In view of such circumstances, it is an object of the invention to provide an apparatus and a method of detecting the position of an obstacle accurately and tracking the obstacle.

BRIEF SUMMARY OF THE INVENTION

According to embodiment of the present invention, there is provided an obstacle tracking apparatus including: an image acquiring unit mounted to a moving object and configured to acquire image sequences including an obstacle; an obstacle detecting unit configured to detect candidate areas of the obstacle at the current time from the image sequences; a state hypothesis storing unit configured to store a state hypothesis group including one or a plurality of state hypothesis or hypotheses of the obstacle at a previous time, the each state hypothesis relating to a motion of the obstacle; a measurement hypothesis generating unit configured to generate a measurement hypothesis group including one or a plurality of the measurement hypothesis or hypotheses obtained by combining measurement hypotheses for the respective positions of the candidate areas of the obstacle and an measurement hypothesis in case the obstacle is not detected; a likelihood calculating unit configured to calculate likelihoods of respective combinations of the respective state hypotheses included in the state hypothesis group and the respective measurement hypotheses included in the measurement hypothesis group; a state hypothesis updating unit configured to obtain a highest likelihood from the likelihoods of the respective combinations of the respective state hypotheses included in the state hypothesis group and the respective measurement hypotheses included in the measurement hypothesis group and update the state hypotheses at the previous time stored in the state hypothesis storing unit using the state hypothesis group at the current time as the state hypothesis group having the highest likelihood; and a hypothesis selecting unit configured to select the state hypothesis having likelihood is the highest from the state hypothesis group at the current time as a state in which the obstacle is detected

According to an aspect of the present invention, the position of the obstacle can be detected and tracked stably from the image sequences acquired by the image input unit mounted to the vehicle.

BRIEF DESCRIPTION OF THE DRAWINGS -

Fig. 1 is a flowchart which also serves as a block diagram of an obstacle tracking apparatus according to an embodiment of the invention;
Fig. 2 is an explanatory drawing of a coordinate system in this embodiment;
Fig. 3 is an explanatory drawing of a case in which a plurality of measured positions exist; and
Fig. 4 is an explanatory drawing of a procedure for selecting a hypothesis.

DETAILED DESCRIPTION OF THE INVENTION

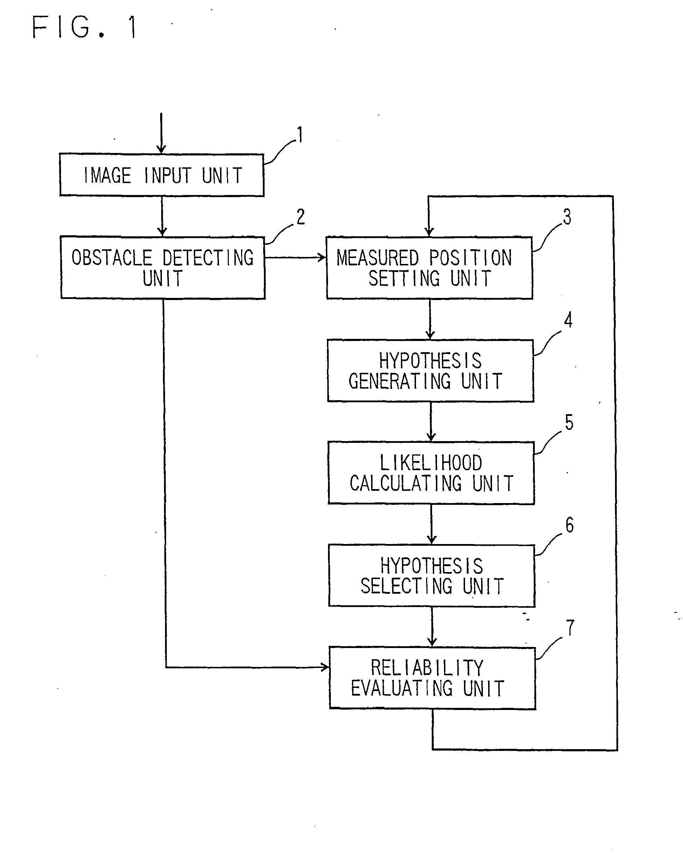

Referring now to Fig. 1 to Fig. 4, an obstacle tracking apparatus according to embodiments of the present invention will be described.

In the obstacle tracking apparatus in this embodiment, a plurality of state hypotheses are set using a plurality of measured positions for a detected obstacle considering ambiguity of obstacle tracking, and select the state hypothesis whose likelihood is the highest among the state hypothesis group at the current time as a state of the obstacle.

(1) Configuration of the Obstacle Tracking Apparatus

Fig. 1 is a flowchart which also serves as a block diagram of an obstacle tracking apparatus in this embodiment.

As shown in Fig. 1, the obstacle tracking apparatus includes an image input unit 1, an obstacle detecting unit 2, a measured position setting unit 3, a hypothesis generating unit 4, a likelihood calculating unit 5, the hypothesis selecting unit 6, and a reliability evaluating unit 7.

The obstacle tracking apparatus can be realized by using, for example, a multi-purpose computer apparatus as a basic hardware. In other words, the obstacle detecting unit 2, the measureed position setting unit 3, the hypothesis generating unit 4, the likelihood calculating unit 5, the hypothesis selecting unit 6 and the reliability evaluating unit 7 can be realized by causing a processor mounted to the computer to execute a program.

(2) Image Input Unit 1

The image input unit 1 has stereo TV cameras that can acquire images of a front area of a vehicle to which the stereo TV cameras is mounted.

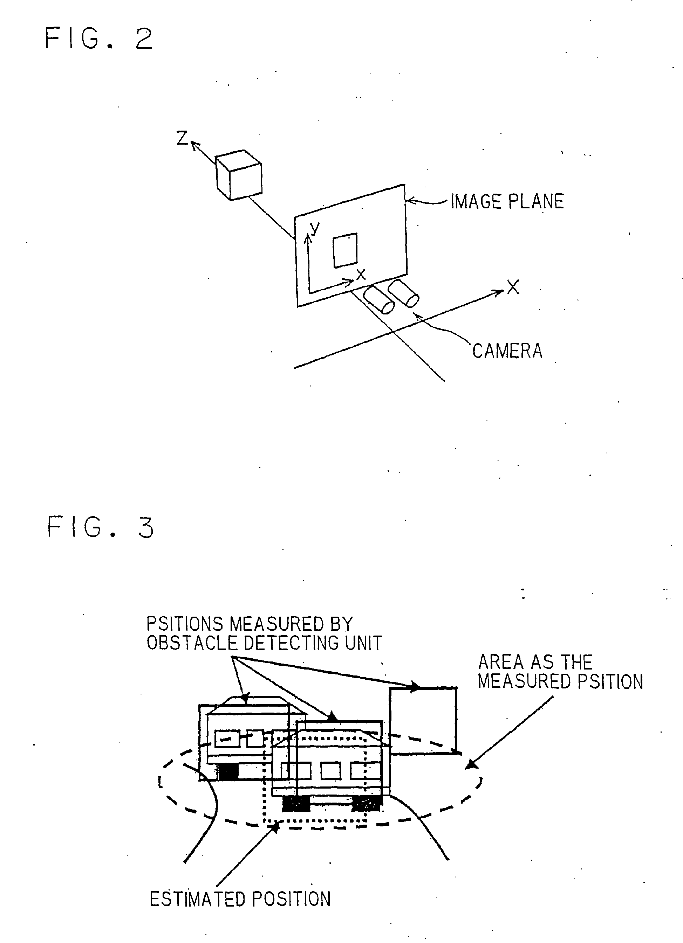

Fig. 2 shows a coordinate system in this embodiment, in which X represents the horizontal direction, Z represents the depth direction of a world coordinate system, and x represents the horizontal direction and y represents the vertical direction of an image coordinate system. The time t is equal the number of frames of the image sequences.

(3) Obstacle Detecting Unit 2

The obstacle detecting unit 2 determines candidate areas of the obstacle from the image sequences acquired by the image input unit 1.

The obstacle detecting unit 2 detects the candidate areas of the obstacle of the vehicle or the like using images of stereo cameras. At this time, as shown in Fig. 2, the position in the image coordinate system $(x, y)$ and the position in the world coordinate system $(X, Z)$ is obtained from a disparity between the image of the left camera and the right camera.

As a method of stereo vision, there is a method described in "Stereo image recognition system for drive assist" IEICE, PRMU97-30, 1997, pp39-46.

(4) Measured Position Setting Unit 3

The measured position setting unit 3 sets the measured position of the obstacle at a current time t. The setting method is as follows.

Firstly, an estimated position of an obstacle that is currently tracked at a previous time t-1 is calculated from the hypothesis generating unit 4. This estimated position is the estimated position at the previous time t-1 obtained according to the same method of obtaining an estimated position at the current time t, which will be described later.

Subsequently, as shown in Fig. 3, the obtained estimated position and a detected position at a current time t obtained by the obstacle detecting unit 2 are compared, and when the distance between the estimated position and the detected position is equal to or smaller than a threshold value, the detected position is determined as a "measured position". The number of the measured position may not be only one, and all the detected positions which have the distance described above equal to or smaller than the threshold value are recognized as the measured positions. For example, in the expression 1 shown below, M-units of measured positions exist.

The measured position is represented by a distance Z in the depth direction and a distance X in the horizontal direction. However, the measured position is only represented by the distance Z in the depth direction in the following description. A measurement distribution of the M-units of measured positions obtained at this time is;

[Expression 1]

$$p^{(j)}{}_{measure}(Z) = \frac{1}{\sqrt{2\pi}\sigma_R} e^{\frac{-1}{2\sigma_R{}^2}(Z-Z_m^{(j)})^2} \quad (j = 1 \cdots M)$$

, and is represented by using Gaussian distribution. Reference sign Zm designates a measured position and σR designates a standard deviation of the measurement distribution.

The measurement distribution of the measured positions that means that there is no measured position will be represented by;

[Expression 2]

$$p^{(j)}{}_{measure}(Z) = \alpha \quad (j = 0)$$

, and is represented by using a uniform distribution. The magnitude is adjusted by coefficient $\alpha$.

In this manner, by setting the measured distribution adequately, the measured position obtained by various detecting methods can also be handled.

(5) Hypothesis Generating Unit 4

The hypothesis generating unit 4 generates measurement hypotheses for the M-units of measured positions set by the measured position setting unit 3 for the respective obstacles. The 0th measurement hypothesis is a hypothesis that there is no measured position. The 1st measurement hypothesis is set to the 1st measured position, and the Mth measurement hypothesis is set to the Mth measured position. (where j=1, 2,...M).

The hypothesis generating unit 4 holds N-units of state hypotheses, that is, a state hypothesis group described later. The term "state" in this description represents kinetic information of the obstacle such as the position or the speed of the obstacle, and the term "state hypothesis" represents a hypothesis relating to these states. The held state hypothesis group will be described further in detail.

$x_t$ represents a state vector, $P_t$ represents a covariance matrix of the state vector, $Z_t$ represents a distance, and R represents an error covariance matrix (standard deviation $\sigma_R$) of the measured position in a state space at the time of. Reference sign A represents a state transition matrix, and Q represents a process noise. Since linear motion of acceleration model is assumed, the following expression is established.

[Expression 3]

$$\mathbf{X}_t = \mathbf{A}\mathbf{X}_{t-1} + \mathbf{w}_{t-1}$$

$$Z_m = \mathbf{H}\mathbf{X}_t + \mathbf{v}_t$$

$$\mathbf{X}_t = [Z_t \ \dot{Z}_t \ \ddot{Z}_t]^T$$

$$\mathbf{A} = \begin{pmatrix} 1 & 1 & 0.5 \\ 0 & 1 & 1 \\ 0 & 0 & 1 \end{pmatrix}$$

$$\mathbf{H} = \begin{pmatrix} 1 & 0 & 0 \end{pmatrix}$$

where, H designates a measurement matrix, $Z_m$ designates the measured position in distance in the depth direction. It is assumed here that a state hypothesis group {(vector $X_{t-1}^{(i)}$; $\pi_{t-1}^{(i)}$) } (where i=0,1,...N-1) in which the vector $x_t^{(i)}$ and the likelihood corresponding thereto is $\pi_t^{(i)}$ in the state space has N state hypotheses. However, since the vector cannot be expressed in a bold letter, it is expressed as "vector x" in this specification. The "vector x" represents the position or the speed of the obstacle in the world coordinate system, the subscripts of x and π represent the time, and superscripts also represent the number of the state hypothesis. The term "likelihood" means the extent of reliability, and the higher the likelihood is, the higher the reliability becomes.

(6) Likelihood Calculating Unit 5

The likelihood calculating unit 5 updates the state hypothesis group held in the hypothesis generating unit 4 through steps of prediction, measurement and estimation described below, and then calculates the likelihood.

(6-1) Prediction

Predicted positions and prior distribution $P_{priori}$ (Z) are calculated with Expression 4 and Expression 6 using the Kalman filter, respectively for the state hypothesis group {(vector $x^{t\,(i)}$; $\pi_t^{(i)}$)} (wherein i=0,1,...N-1) estimated at the time t-1. $P_0^{(i)}$ represents a component of a first raw and a first column of $P_t^{-(i)}$. <vector $x_{t/t-1}$> represents a predicted position in the current state, <vector $x_{t-1/t-1}$> represents the estimated position in the past state, $P_{t/t-1}$ represents the error-covariance matrix in the predicted state, and $P_{t-1/t-1}$ represents a error-covariance matrix in the past state. However, since "vector x" with a sign ^ cannot be expressed in the description, it is expressed as "vector x".

[Expression 4]

$$\hat{\mathbf{x}}_{t/t-1}^{(i)} = \mathbf{A}\hat{\mathbf{x}}_{t-1/t-1}^{(i)}$$

$$\mathbf{P}_{t/t-1}^{(i)} = \mathbf{A}\mathbf{P}_{t-1/t-1}^{(i)}\mathbf{A}^T + \mathbf{Q}$$

[Expression 5]

$$p^{(i)}{}_{priori}(Z) = \frac{1}{\sqrt{2\pi P_0^{(i)}}} e^{\frac{-1}{2P_0^{(i)2}}(Z - \mathbf{H}\hat{\mathbf{x}}_{t/t-1}^{(i)})^2}$$

(6-2) Measurement

The measurement distribution is determined with Expression 1 and Expression 2 from the M-units of measured positions obtained at the time t. A Kalman gain $K_t^{(i,j)}$ is calculated using Expression 6.

[Expression 6]

$$K_t^{(i,j)} = P_{t/t-1}H^T\left(HP_{t/t-1}H^T + R\right)^{-1}$$

(6-3) Estimation

NxM-units of estimated positions and posterior distributions are calculated with Expression 7 using the Kalman filter from a combination of the N-units of state hypotheses estimated at the time of t-1 { (vector $x_{t-1}^{(i)}$; $\pi_{t-1}^{(i)}$) } (where i=0, 1, ... N-1) and the M-units of measurement hypotheses.

[Expression 7]

$$\hat{\mathbf{x}}_{t/t}^{(i,j)} = \hat{\mathbf{x}}_{t/t-1}^{(i)} + \mathbf{K}^{(i,j)}(Z_m^{(j)} - \mathbf{H}\hat{\mathbf{x}}_{t/t-1}^{(i)})$$

$$\mathbf{P}_{t/t}^{(i,j)} = (\mathbf{I} - \mathbf{K}^{(i,j)}\mathbf{H})\mathbf{P}_{t/t-1}^{(i)}$$

Assuming that the probability of the prior distribution at the estimated position is a prior probability, and the probability of the measurement distribution at the estimated position is a measurement probability, a posterior probability is calculated as a product of the prior probability and the measurement probability using Expression 8 by Bayes rule.

[Expression 8]

$$p^{(i,j)}{}_{posteriori}(\mathbf{H}\hat{\mathbf{x}}_{t/t}^{(i,j)}) = p^{(i)}{}_{priori}(\mathbf{H}\hat{\mathbf{x}}_{t/t}^{(i,j)}) \times p^{(j)}{}_{measure}(\mathbf{H}\hat{\mathbf{x}}_{t/t}^{(i,j)})$$

The posterior probability is set to the likelihood of the new state hypothesis. The posterior probability is calculated by Expression 9 with a weighting coefficient w of the combination of the measurement hypothesis and the state hypothesis.

[Expression 9]

$$\pi_t^{(i,j)} = w^{(i,j)} \times \pi_t^{(i)} \times p^{(i,j)}{}_{posteriori}(\mathbf{H}\hat{\mathbf{x}}_{t/t}^{(i,j)})$$

The weighting coefficient w of the combination of the measurement hypothesis and the state hypothesis is using when additional information exists.

(7) Hypothesis Selecting Unit 6

The hypothesis selecting unit 6 selects combinations whereby a highest likelihood is achieved for each of M-units of measurement hypotheses from a new state hypothesis with Expression 10.

[Expression 10]

$$\pi_t^{(j)} = \max(\pi_t^{(i,j)})$$

A new state hypothesis group is updated as { (vector $x_t^{(j)}$ ; $\pi_t^{(j)}$) } (where, j=0, 1, ... M-1). $\pi_t^{(j)}$ is normalized so that the total of the likelihoods in all the state hypotheses becomes "1".
In the M-units of the new state hypotheses, the one whereby the value of $\pi_t^{(j)}$ is maximum is selected as the state hypothesis of the obstacle at the current time t.

(8) Reliability Evaluating Unit 7

The reliability evaluating unit 7 acquires the kinetic information such as the position, speed and acceleration of the obstacle from the state hypothesis selected by the hypothesis selecting unit 6.
The reliability is evaluated from an extent of error of a kinetic state, and tracking of the obstacle whose reliability is low is stopped.
In addition, when the candidate areas of the obstacle obtained from the obstacle detecting unit 2 is new, tracking of the new candidate area is started.
The process as described above is performed for the image sequences, and the obstacle such as the vehicle is tracked to detect the accurate position thereof.

(9) Contents of Process

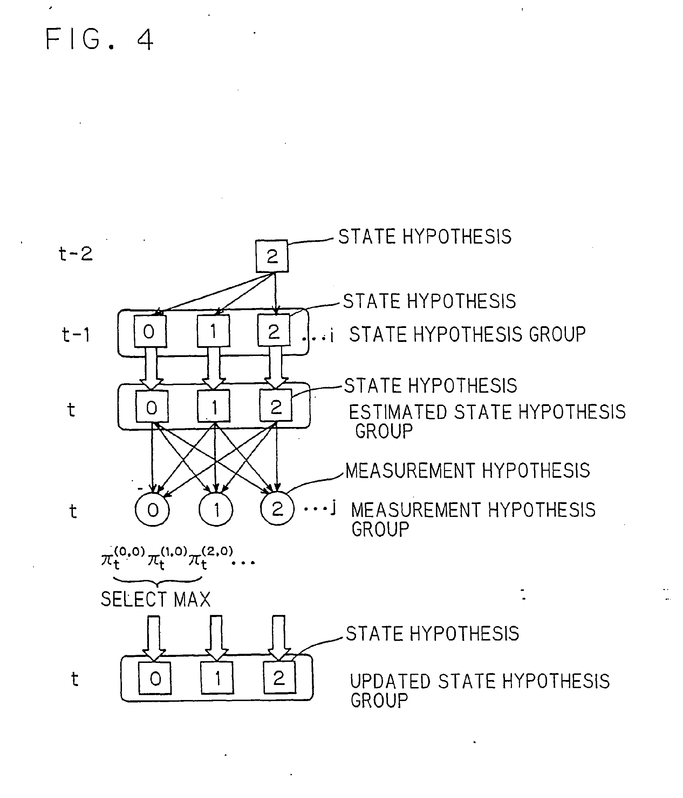

Referring now to Fig. 4, contents of the process of the obstacle tracking apparatus will be described.
It is assumed that the 2nd state hypothesis is selected on the basis of the 2nd measured position at the time t-2.
Since the accurate measured position could not be obtained at the time t-1, the likelihoods of the combination of the state hypothesis and the measurement hypothesis from the time t-2 to the time t-1 is calculated. -Then, the likelihood of the 2nd state hypothesis and the 0th measurement hypothesis is the maximum, and the 0th state hypothesis on the basis of the 0th measurement hypothesis which means that the measured position does not exist in the state at the time t-1 is selected.
In the state at the time t, since the result from the obstacle detecting unit 2 is preferable, the likelihood of the combination of the state hypothesis and the measurement hypothesis from the time t-1 to the time t is calculated. Then, the likelihood of the combination of the 0th state hypothesis and the 2nd measurement hypothesis become is the maximum, and the 2nd state hypothesis on the basis of the 2nd measurement hypothesis as the result of the stereo vision is selected.
In all possible combinations between the state hypotheses at the previous time t-1 and the measurement hypotheses at the current time t, the highest likelihood of the combination is considered as an accurate correspondence.

(10) Effects

According to the obstacle tracking apparatus of this embodiment, the apparatus tracks obstacles using multi hypotheses and can detect the position ob the obstacle by selecting the state hypothesis whose likelihood is the highest. Accordingly, a phenomenon of erroneous tracking of another obstacle when the candidate areas of the obstacle are not detected is reduced, and even when erroneous tracking occurs temporarily, the correct obstacle can be tracked again. In addition, since the hypothesis is generated adequately according to the detected candidate areas of the obstacle, the processing time can be reduced.

(11) Modification

The invention is not limited to the above-described embodiment, and may be modified variously without departing from the scope of the invention.

For example, the obstacle detecting unit 2 can detect the obstacle by an active sensor such as an extremely high frequency wave radar (MMW).

**Claims**

1.  An obstacle tracking apparatus comprising:

    an image acquiring unit mounted to a moving object and configured to acquire image sequences including an obstacle;
    an obstacle detecting unit configured to detect candidate areas of the obstacle at a current time from the image sequences;
    a state hypothesis storing unit configured to store a state hypothesis group including one or a plurality of state hypothesis or hypotheses of the obstacle at a previous time, the each state hypothesis relating to a motion of the obstacle;
    a measurement hypothesis generating unit configured to generate a measurement hypothesis group including one or a plurality of the measurement hypothesis or hypotheses obtained by combining measurement hypotheses for the respective positions of the candidate areas of the obstacle and a measurement hypothesis in case the obstacle is not detected;
    a likelihood calculating unit configured to calculate likelihoods of respective combinations of the respective state hypotheses included in the state hypothesis group and the respective measurement hypotheses included in the measurement hypothesis group;
    a state hypothesis updating unit configured to obtain a highest likelihood from the likelihoods of the respective combinations of the respective state hypotheses included in the state hypothesis group and the respective measurement hypotheses included in the measurement hypothesis group and update the state hypotheses at the previous time stored in the state hypothesis storing unit using the state hypothesis group at the current time as the state hypothesis group having the highest likelihood; and
    a hypothesis selecting unit configured to select the state hypothesis having the highest likelihood from the state hypothesis group at the current time as a state in which the obstacle is detected.

2.  The obstacle tracking apparatus according to Claim 1, wherein the state hypothesis is represented by kinetic information including the position of the obstacle and the likelihood.

3.  The obstacle tracking apparatus according to either of claims 1 or 2,
    wherein the measurement hypothesis is represented by Gaussian distribution for each detected position of the obstacle.

4.  The obstacle tracking apparatus according to any preceding claim,
    wherein the measurement hypothesis that the obstacle is not detected is represented by a uniform distribution.

5.  The obstacle tracking apparatus according to any preceding claim,
    wherein the likelihood for each combination of the state hypothesis included in the state hypothesis group and the measurement hypothesis included in the measurement hypothesis group is calculated using a Kalman filter.

6.  The obstacle tracking apparatus according to any preceding claim,
    wherein the kinetic information of the obstacle is obtained from the selected state hypothesis.

7.  The obstacle tracking apparatus according to Claim 6, wherein the reliability of the kinetic information is evaluated.

8.  An obstacle tracking method comprising:

    acquiring image sequences including an obstacle;
    detecting candidate areas of obstacles at the current time from the image sequences;
    storing a state hypothesis group including one or a plurality of state hypothesis or hypotheses of the obstacle at a previous time, the each state hypothesis relating to a motion of the obstacle;

generating a measurement hypothesis group including one or a plurality of the measurement hypothesis or hypotheses obtained by combining measurement hypotheses for the respective positions of candidate areas of the obstacle and a measurement hypothesis in case the obstacle is not detected;

calculating likelihoods of respective combinations of the respective state hypotheses included in the state hypothesis group and the respective measurement hypotheses included in the measurement hypothesis group;

obtaining highest likelihood from the likelihoods of the respective combinations of the respective state hypotheses included in the state hypothesis group and the respective measurement hypotheses included in the measurement hypothesis group and updating the stored state hypothesis at the previous time using the state hypothesis group at the current time as the state hypothesis group having the highest likelihood; and

selecting the state hypothesis having the highest likelihood from the state hypothesis group at the current time as a state in which the obstacle is detected.

9. The obstacle tracking method according to Claim 8,
   wherein the state hypothesis is represented by kinetic information including the position of the obstacle and the likelihood.

10. The obstacle tracking method according to either of claims 8 or 9,
    wherein the measurement hypothesis is represented by Gaussian distribution for each detected position of the obstacle.

11. The obstacle tracking method according to any of claims 8 to 10,
    wherein the measurement hypothesis that the obstacle is not detected is represented by a uniform distribution.

12. The obstacle tracking method according to any of claims 8 to 11,
    wherein the likelihood for each combination of the state hypothesis included in the state hypothesis group and the measurement hypothesis included in the measurement hypothesis group is calculated using a Kalman filter.

13. The obstacle tracking method according to any of claims 8 to 12,
    wherein the kinetic information of the obstacle is obtained from the selected state hypothesis.

14. The obstacle tracking method according to Claim 13,
    wherein the reliability of the kinetic information is evaluated.

15. An obstacle tracking program for realizing:

    an image acquiring function mounted to a moving object for acquiring t image sequences including an obstacle;

    an obstacle detecting function for detecting candidate areas of the obstacle at the current time from the image sequence;

    a state hypothesis storing function for storing a state hypothesis group including one or a plurality of state hypothesis or hypotheses of the obstacle at a previous time, the each state hypothesis relating to a motion of the obstacle;

    a measurement hypothesis generating function for generating a measurement hypothesis group including one or a plurality of the measurement hypothesis or hypotheses by combining measurement hypotheses for the respective positions of the candidate areas of the obstacle and a measurement hypothesis in case the obstacle is not detected;

    a likelihood calculating function for calculating likelihoods of respective combinations of the respective state hypotheses included in the state hypothesis group and the respective measurement hypotheses included in the measurement hypothesis group;

    a state hypothesis updating function for obtaining a highest likelihood from the likelihoods of the respective combinations of the respective state hypotheses included in the state hypothesis group and the respective measurement hypotheses included in the measurement hypothesis group and updating the state hypothesis at the previous time stored by the state hypothesis storing function using the state hypothesis group at the current time as the state hypothesis group having the highest likelihood; and

    a hypothesis selecting function for selecting the state hypothesis having the highest likelihood from the state hypothesis group at the current time as a state in which the obstacle is detected with a computer.

**16.** The obstacle tracking program according to Claim 15, wherein the state hypothesis is represented by kinetic information including the position of the obstacle and the likelihood.

**17.** The obstacle tracking program according to either of claims 15 or 16,
wherein the measurement hypothesis is represented by Gaussian distribution for each detected position of the obstacle.

**18.** The obstacle tracking program according to any of claims 15 to 17,
wherein the measurement hypothesis that the obstacle is not detected is represented by a uniform distribution.

**19.** The obstacle tracking program according to Claim 15, wherein the likelihood for each combination of the state hypothesis included in the state hypothesis group and the measurement hypothesis included in the measurement hypothesis group is calculated using a Kalman filter.

**20.** The obstacle tracking program according to any of claims 15 to 19,
wherein the kinetic information of the obstacle is obtained from the selected state hypothesis.

**21.** The obstacle tracking program according to Claim 20, wherein the reliability of the kinetic information is evaluated.

# FIG. 1

```
              │
              ▼
   ┌─────────────────────┐ 1
   │   IMAGE INPUT UNIT   │
   └─────────────────────┘
              │
              ▼
   ┌─────────────────────┐ 2        ┌─────────────────────┐ 3
   │  OBSTACLE DETECTING  │────────▶ │   MEASURED POSITION   │
   │        UNIT          │          │    SETTING UNIT       │
   └─────────────────────┘          └─────────────────────┘
              │                                 │
              │                                 ▼
              │                      ┌─────────────────────┐ 4
              │                      │     HYPOTHESIS        │
              │                      │   GENERATING UNIT     │
              │                      └─────────────────────┘
              │                                 │
              │                                 ▼
              │                      ┌─────────────────────┐ 5
              │                      │     LIKELIHOOD        │
              │                      │  CALCULATING UNIT     │
              │                      └─────────────────────┘
              │                                 │
              │                                 ▼
              │                      ┌─────────────────────┐ 6
              │                      │     HYPOTHESIS        │
              │                      │   SELECTING UNIT      │
              │                      └─────────────────────┘
              │                                 │
              │                                 ▼
              │                      ┌─────────────────────┐ 7
              └─────────────────────▶│     RELIABILITY       │
                                     │   EVALUATING UNIT     │
                                     └─────────────────────┘
```

FIG. 2

Z

IMAGE PLANE

y

x

X

CAMERA

FIG. 3

PSITIONS MEASURED BY
OBSTACLE DETECTING UNIT

AREA AS THE
MEASURED PSITION

ESTIMATED POSITION

# FIG. 4

$$\pi_t^{(0,0)} \quad \pi_t^{(1,0)} \quad \pi_t^{(2,0)} \ldots$$

SELECT MAX

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006068402 A

- JP 8094320 A

**Non-patent literature cited in the description**

- **ABE et al.** Report from Institute of Electronics, Information and Communication Engineers (IEICE. *PRMU2003-241,* 63-66

- Stereo image recognition system for drive assist. *IEICE, PRMU97-30,* 1997, 39-46